# EUROPEAN PATENT APPLICATION

(11) **EP 3 367 138 A1**
(43) Date of publication of application: **29.08.2018**
(21) Application number: 18000185.1
(22) Date of filing: 23.02.2018
(51) Int. Cl.: G01W 1/14

(54) **AUTOMATIC PRECIPITATION SAMPLER SYSTEM AND OPERATION METHOD THEREOF**

(30) Priority: 24.02.2017 KR 20170024975
(71) Applicant: Korea Meteorological Administration, Seoul 07062 (KR)
(72) Inventor: Jung-HO Lee, Gangwon-do 25342 (KR); Ha-Young Yang, Jeju-do 63568 (KR); Ki-Ho Chang, Jeju-do, 63569 (KR); Jeong Hwan Choi, Gangwon-do 25559 (KR); Jin-Yim Jeong, Seoul, 08700 (KR); Baek-Jo Kim, Jeju-do, 63090 (KR); Yong-Tea SunWoo, Gyeonggi-do, 12143 (KR); Hyun-Chul Shin, Gyeonggi-do, 11752 (KR); Cheol-Ho Han, Gyeonggi-do, 11702 (KR)
(74) Representative: Lichti - Patentanwälte Partnerschaft mbB

(57) **Abstract**

Disclosed are an automatic precipitation sampler system and an operation method thereof. The automatic precipitation sampler system, includes a main body having an water receiving port provided in the upper portion thereof, a driving unit disposed in the main body, a circular table disposed in the main body and rotating by the driving unit, a plurality of sample containers arranged at uniform intervals from each other at positions spaced away from the center of the circular table by a predetermined distance in the radial direction of the circular table, and a plurality of funnels arranged on top of each of the plurality of sample containers such that any one of the plurality of funnels is aligned with the water receiving port.

## Description

### BACKGROUND OF THE INVENTION

### Field of the Invention

The present invention relates to an automatic precipitation sampler system and an operation method thereof.

### Background Art

The methods of verifying the effects of artificial snowfall and artificial rainfall experiments are as follows: physical research by ground observation using radar, radiometers, disdrometers, snow-depth meters, etc., and aerial observation using PCASP, CCNC, 2DP, FSSP, CIP, etc., random seeding experiment research, in which one of two regions is randomly selected and the other one is to be a non-seed region in the same conditions of the temperature, wind, cloudy water content and the like, and a modeling research to verify the diffusion and seeding effects of a seeding material through numerical simulations (changes of precipitation and cloud microphysical parameters in a non-seeding mode of a seeding mode).

In addition, since it is difficult to clearly distinguish through observation whether the increased precipitation after the experiment is caused by natural fluctuations or by experiments, studies on the chemical compositions of precipitation before and after the experiment in a target area have been also carried out.

Also, the distribution characteristics of silver background concentration has been investigated for the evaluation of the experiment in Korea. A cylindrical water sampler made of polyethylene with the inner diameter of 28.8 cm and the height of 34.0 cm was installed at a position of 1.2 m from the ground surface and the water sampled from 09:00 on the day of the installation to 09:00 the next day was analyzed as the same day sample.

In order to investigate whether a seeding material reaches a target area and whether silver iodide (AgI) that is the seeding material contributes to the precipitation process in the cloud, Zipori et al. collected precipitation by connecting a plastic funnel with a diameter of 25 cm to a polypropylene tube of 50 mℓ. As for the sampling method thereof, the tubes were manually replaced when the tubes were full of precipitation or once every 30 minutes or one hour.

In addition, Idaho Power Company IPC has conducted snowfall sampling studies with Boise State University and Curtain College for several years in order to perform in-depth chemical analysis of the Faet River basin in southwest Utah, Idaho, USA. In the case of Boise State University, after drilling a hole in an area covered with snow of several tens of meters, sample tubes having the diameter of 3 cm were sequentially inserted in the downward direction in order to sample snow. Curtain College sampled snow by inserting a thin slab having the thickness of 1 cm into a snowy area and then pulled it again.

The methods described above are limited to day-to-day precipitation, or where there is a lot of snow, and there are restrictions that the entire process must be done by people themselves.

### SUMMARY OF THE INVENTION

### Technical Problem

Accordingly, the present invention has been made to solve the above-mentioned problems occurring in the prior arts, and it is an objective of the present invention to provide an automatic precipitation sampler system and an operation method thereof, which can minimize the constraint in the conventional technique and effectively recognize the seeding effect with time.

### Technical Solution

To accomplish the above objectives, according to one aspect of the present invention, there is provided an automatic precipitation sampler system (hereinafter, briefly referred to as an "automatic precipitation sampler"), including: a main body; a driving unit disposed in the main body; a circular table disposed in the main body and rotating by the driving unit; a plurality of sample containers arranged at a plurality of positions spaced away from the center of the circular table in the radial direction of the circular table; and funnels respectively arranged on top of each of the plurality of sample containers.

According to an embodiment, the automatic precipitation sampler may further include a control box connected to the driving unit and controlling the operation of the driving unit.

In the automatic precipitation sampler according to an embodiment, a rotation plate (a container mounting plate) may rotate as a cover is automatically opened first in response to the pressing of a starting button.

A rain collection time can be adjusted by a setting timer. If one hour is set, rain collection is carried out for one hour and the rotation plate is rotated while the cover is opened so that next containers are set in position in turn and the rain collection is carried out for the mounted containers for the set time repeatedly. As the rain collection is carried out for all the number of containers, the cover is closed and the rain collection is automatically finished.

According to an embodiment, if the automatic precipitation sampler includes nine rain collection containers and the rain collection time is set to nine hours, then the sampling can be carried out for nine hours. The diameter of a water receiving port is 19 cm, which can be similar to the diameter of the rain gages used in the industry. In order to minimize contamination by external factors, funnels and containers for rain collection can be replaced with new ones after one hour.

To accomplish the above objectives, according to another aspect of the present invention, there is provided an automatic precipitation sampler system, including: a main body having an water receiving port provided in the upper portion thereof; a driving unit disposed in the main body; a circular table disposed in the main body and rotating by the driving unit; a plurality of sample containers arranged at uniform intervals from each other at positions spaced away from the center of the circular table by a predetermined distance in the radial direction of the circular table; and funnels arranged on top of each of the plurality of sample containers such that any one of the funnels is aligned with the water receiving port.

According to an embodiment, the plurality of sample containers are arranged in a circle and are rotated on the circular table, which is rotated by the driving unit, so as to be sequentially arranged below the water receiving port.

According to an embodiment, the circular table has container holders for fixing or supporting the plurality of sample containers.

According to an embodiment, the automatic precipitation sampler system may further include a control box coupled to the outside of the main body and connected to a cover unit of the main body and the driving unit so as to control the operations of the cover unit and the driving unit.

According to an embodiment, a controller in the control box controls the cover unit according to an input signal or a preset command such that a cover of the water receiving port, which is mounted on an upper body of the main body, can be opened or closed, and controls the driving unit according to the input signal or the preset command such that the circular table can rotate at a predetermined angle at a preset time.

To accomplish the above objectives, according to still another aspect of the present invention, there is provided a method of operating an automatic precipitation sampler system, which includes a main body, a driving unit, a circular table and a control box, including: the step of opening a cover of a water receiving port of an upper body of the main body; the step of aligning one of a plurality of sample containers, which are arranged in a circle on a circular table inside the upper body, under the water receiving port; and the step of controlling the driving unit by a controller of the control box according to preset operation conditions stored in a memory of the control box such that the circular table rotates and the plurality of sample containers circulates in sequence at every preset time.

According to an embodiment, the method of operating an automatic precipitation sampler system further includes the step of covering the water receiving port when rain collection is completed for the plurality of sample containers or according to a preset operation condition, after the rotating step. A touch screen of the control box can display system conditions or operation conditions in the above steps.

### Effect of the Invention

In the case of using the automatic precipitation sampler system and the operation method thereof according to the present invention as described above, it is possible to remove most of the constraints that people have to do manual work when verifying the effects of artificial snowfall and artificial rainfall experiments. In addition, according to the present invention, there is an advantage that the seeding effect with time can be efficiently recognized.

### BRIEF DESCRIPTION OF DRAWINGS

Fig. 1 is a partially taken perspective front view of an automatic precipitation sampler system (hereinafter, briefly referred to as an "automatic precipitation sampler") according to an embodiment of the present invention.
Fig. 2 is a top plan view of the automatic precipitation sampler of Fig. 1.
Fig. 3 is a top plan view of the automatic precipitation sampler of Fig. 2, in which an upper cover and an automatic cover unit are removed.
Fig. 4 is a front view for explaining a circular table of the automatic precipitation sampler of Fig. 1.
Fig. 5 is an exemplary view of a driving unit which can be employed in the automatic precipitation sampler of Fig. 1, and
Fig. 6 is an exemplary view of a control box, which can be employed in the automatic precipitation sampler of Fig. 1.

### DETAILED DESCRIPTION OF THE PREFERRED EMBODIMENT

Hereinafter, forms of the present disclosure will be described in detail with reference to the accompanying drawings. As those skilled in the art would realize, the described forms may be modified in various different ways, all without departing from the spirit or scope of the present disclosure. Further, throughout the specification, like reference numerals refer to like elements.

The terminology used herein is for the purpose of describing particular forms only and is not intended to be limiting of the disclosure. As used herein, the singular forms "a," "an," and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

Although forms are described herein as using a plurality of units to perform the exemplary process, it is understood that the exemplary processes may also be performed by one or plurality of modules. Additionally, it is understood that the term controller/control unit refers to a hardware device that includes a memory and a processor. The memory is configured to store the modules, and the processor is specifically configured to execute said modules to perform one or more processes which are described further below. Moreover, it is understood that the units or modules described herein may embody a controller/control unit for controlling operation of the unit or module.

Further, control logic of the present disclosure may be embodied as non-transitory computer readable media on a computer readable medium containing executable program instructions executed by a processor, controller/control unit or the like.

Relational terms such as first, second, and the like may be used for describing various elements, but the elements should not be limited by the terms. These terms are only used to distinguish one element from another. For example, a first component may be named a second component without being departed from the scope of the present disclosure and the second component may also be similarly named the first component. The term 'and/or' means any one or a combination of a plurality of related and described items.

When it is mentioned that a certain component is "coupled with" or "connected with" another component, it should be understood that the certain component is directly "coupled with" or "connected with" to the other component or a further component may be located there between. In contrast, when it is mentioned that a certain component is "directly coupled with" or "directly connected with" another component, it will be understood that a further component is not located there between.

Hereinafter, preferred embodiment of the present invention will be described in detail with reference to the accompanying drawings. In describing the disclosure, to facilitate the entire understanding of the disclosure, corresponding reference numbers refer to corresponding elements throughout the description of the drawings and the repetitive description thereof will be omitted.

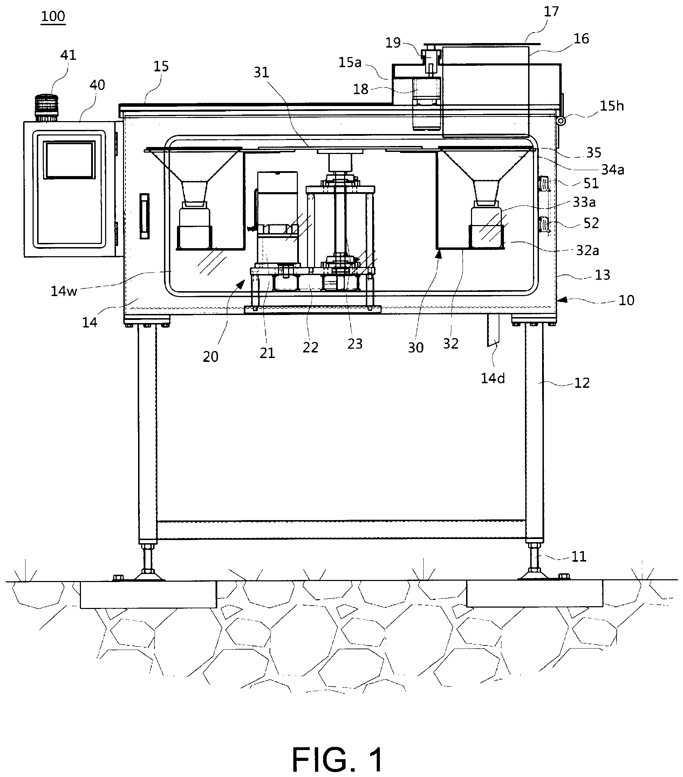

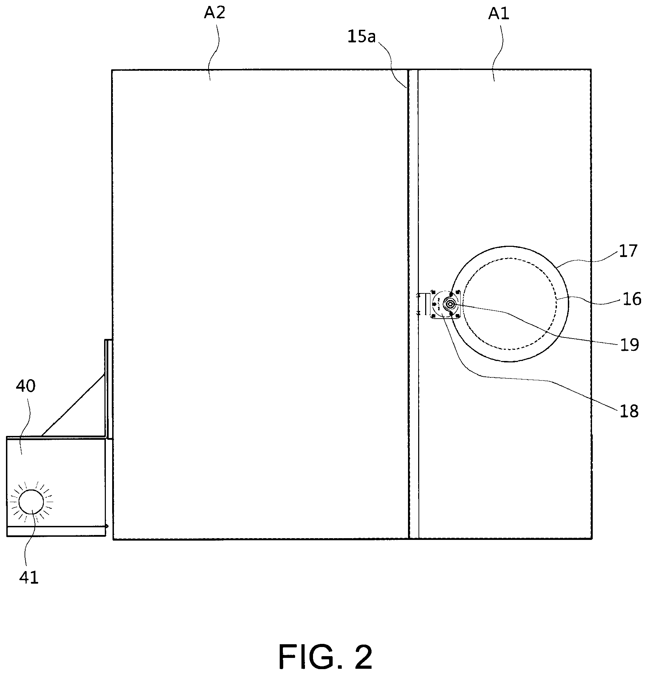

Fig. 1 is a partially taken perspective front view of an automatic precipitation sampler system (hereinafter, briefly referred to as an "automatic precipitation sampler") according to an embodiment of the present invention, and Fig. 2 is a top plan view of the automatic precipitation sampler of Fig. 1.

Referring to Fig. 1, an automatic precipitation sampler 100, according to the present embodiment, includes a main body 10, a driving unit 20, a circular table 30 and a control box 40. In Fig. 1, a part of the funnel, a funnel detection sensor 51, a container detection sensor 52, a part of a water receiving port 16, a cover unit 18 and a lower end portion of the support frame of the driving unit 20 are seen through the front portion of the upper body 13 of the main body 10.

The main body 10 can house and protect constituent elements of the system, and function to position at least one of the constituent elements at a predetermined height or position. The driving unit 20 may be disposed in an area defined or formed by the main body 10. In addition, the circular table 30 may be disposed in an area defined or formed by the main body 10. The circular table 30 can be at least partially rotated by the driving unit 20.

The circular table 30 may include a plurality of sample containers 33a such that the plurality of sample containers 33a may be disposed on the circular table 30. The plurality of sample containers may be arranged at uniform intervals from each other at positions spaced away from the center of the circular table 30 by a predetermined distance in the radial direction of the circular table 30. In addition, funnels 34a may be respectively arranged on top of each of the plurality of sample containers. At least one of the funnels can be coupled to corresponding one of the sample containers. Furthermore, at least one of the funnels can be fixed to the circular table 30 while maintaining the coupled relationship with respect to the corresponding sample container.

The control box 40 may be disposed on the outside of the main body 10. The control box 40 is connected to the driving unit 20 and thus can control the operation of the driving unit 20. In addition, the control box 40 can control the operation of the actuator 18 of a cover unit 18, which is provided on or coupled to the upper side of the main body 10.

Now, the main body 10 will be described in more detail as follows.

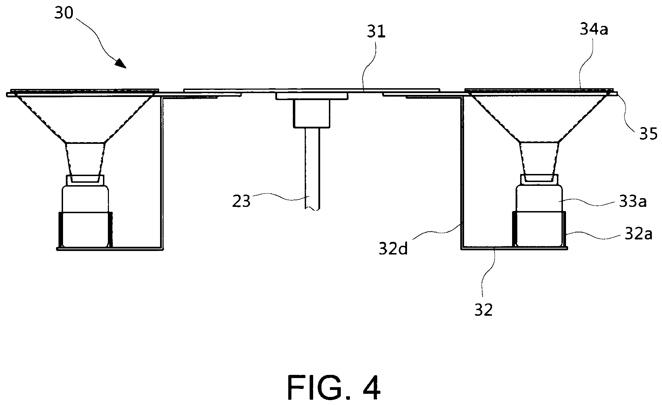

The main body 10 may have a box shape except for the control box 40 (see Figs. 2 and 4). The box shape may have the size of about 970 mm in width, about 970 mm in length, and about 1,200 mm in height. The main body 10 may include a lower frame 12 and an upper body 13.

The lower frame 12 may have a horizontal frame and a vertical frame, and each of the frames may be prepared as a rectangular pipe. In addition, an adjuster 11 may also be provided underneath the lower frame 12, in which case the equipment or system can be fixed to a floor base via the adjuster 11 with anchor bolts.

The upper body 13 may include doors 14 disposed on one side (the front surface) and the other side (the rear surface) of the rectangular body. The door 14 may have a window 14w in the center portion thereof. The window 14w can function to allow an operator to see the inside of the upper body 13 from the outside through the same. The door 14 may have a structure capable of being opened and closed in one direction.

A small heater can be installed inside the upper body 13 so as to maintain the temperature at 20°C. In addition, a heat insulating material for keeping warmth can be disposed inside the upper body 13. As the heat insulating material, a foam panel or the like can be used, and the thickness of the heat insulating material can be about 5 mm.

The upper body 13 may have a structure, in which the entire upper portion thereof can be opened and closed. To this end, the upper cover 15 of the upper body 13 may be provided at one side thereof with a hinge part 15h such that the upper cover 15 and the upper main body are hinge-coupled to each other.

Besides, the upper cover 15 of the upper body may be formed with an inclination. The upper cover 15 can be mounted to have an inclination of about six degrees from the one end to the other end with respect to the horizontal plane corresponding to the sea level or a horizontal line included therein. According to the structure and arrangement of the upper cover 15, snow or rainwater falling onto the upper cover 15 may fall down to the lower portion of the upper body 13 due to gravity.

The upper body 13 may have the water receiving port 16 disposed at a predetermined distance from the center of the upper cover 15 or in one region of the upper cover 15. The water receiving port 16 may be protruded upwards beyond the upper cover 15 so that the upper cover 15 can be divided into a first area A1, in which the water receiving port 16 is located, and a second area A2, wherein a stepped part 15a may be disposed in the boundary between the first area A1 and the second area A2 (see Fig. 2).

The distance from the center of the upper cover 15 to the center of the water receiving port 16 can be about 300 mm, and the diameter of the water receiving port 16 can be about 190 mm. The water receiving port 16 can be opened and closed by the cover unit 18, which is coupled to the upper body 13 or the upper cover 15.

The cover unit 18 may include an automatic cover unit, which is operated as a separate drive unit. The cover unit 18 can operate to open and close by the cover 17 of the water receiving port in a hinged manner. To this end, the cover unit 18 has a holder 19 coupled to the cover 17, and can extend or retract the holder 19 or rotate the holder 19 in the clockwise or counterclockwise direction. Also, a hot wire can be attached to the upper cover 15 so as to prevent snow accumulation.

Further, the upper body 13 may have a drain pipe 14d at a lower portion thereof. The drain pipe 14d may extend downwards from the bottom of the inside of the upper body 13 to the outside of the upper body 13 through the bottom surface of the body. In the rain introduced into the upper body 13 through the water receiving port 16, the water which is not filled in the sample containers 33a can be discharged to the outside of the upper body 13 through the drain pipe 14d.

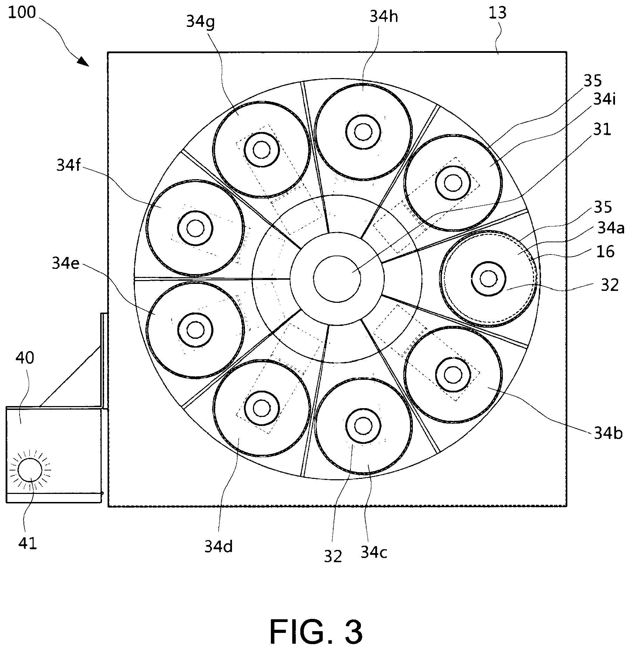

Next, the circular table 30, the driving unit 20 and the control box 40 will be described in more detail with reference to Fig. 3 to Fig. 6.

Fig. 3 is a top plan view of the automatic precipitation sampler of Fig. 2, in which the upper cover and the automatic cover unit are removed, and Fig. 4 is a front view for explaining the circular table of the automatic precipitation sampler of Fig. 1.

Referring to Fig. 3 and Fig. 4, in the automatic precipitation sampler 100 according to the present embodiment, the circular table 30 is arranged so as to be rotate by the driving unit in the upper body 13.

The circular table 30 may include a disc-shaped driving plate 31, a plurality of container holder supports 32, each of which is connected to the driving plate 31 with one end so as to be disposed radially from the driving plate 31, and sample containers 33a, each of which is disposed on the other end of each of the container holder supports 32.

In order to support or fix the sample containers 33a, container holders 32a may be respectively disposed at the other end of each of the container holder supports 32. A predetermined portion of each of the sample containers 33a may be inserted into the corresponding container holder 32a. The container holders 32a secure the sample containers 33a on the circular table 30. The container holders 32a may be referred to as lower bracket holders.

In addition, the circular table 30 may have a plurality of funnel supports 35, each of which is coupled to the circular driving plate 31 at one end and arranged in a radial pattern from the driving plate 31. Each of the funnel supports 35 may have a ring shape and secure a plastic disposable funnel on the circular table.

The funnels 34a through 34i may be inserted into the respectively corresponding funnel supports 35 such that the upper ends of the funnels come into contact with the funnel supports 35 and the lower end portions thereof are suspended. The lower end portion of each funnel can be inserted at a predetermined depth into the top opening of the corresponding sample container.

The pairs of the sample containers 33a and the corresponding funnels may be spaced at uniform intervals from each other and arranged at radial positions located at a predetermined distance from the center of the circular table 30, wherein the predetermined distance corresponds to a half of the diameter of the circular table and may be about 300 mm to about 320 mm.

For a stacked arrangement of the sample containers and the corresponding funnels, each container holder support 32 may include a stepped part 32d provided between the one end connected to the driving plate 31 and the other end where the container holder 32 is disposed. The stacked arrangement includes placing the funnel on at least one sample container. The funnels can be made of a plastic disposable material. One of the funnels 34a through 34i may be arranged in a coaxial shape in one direction with respect to the water receiving port 16. The diameter of the water receiving port 16 is 19 cm, which may be similar to the diameter of the rain gages used in the industry.

The circular table 30 can be made of an aluminum material with a diameter of 750 mm to 860 mm. In this embodiment, the circular table 30 can rotate in nine steps based on the shaft (or the central axis) of the drive plate 31, which is located in the center of the circular table 30. The driving plate 31 is coupled to the driving shaft 23, which is rotated by the driving unit, and can rotate in association with the rotation of the driving shaft 23.

Meanwhile, the circular table 30 is not limited to the configuration of using nine sample containers, but can be configured to use eight or ten sample containers or the like. When using even numbered sample containers, the sample containers can exhibit a symmetrical shape on the cross section of the circular table 30 (see Fig. 4).

According to the present embodiment, nine rain collection containers, that is, nine sampling containers can be installed in the automatic precipitation sampler, and rain sampling can be performed for nine hours by setting the sampling time to one hour. In order to minimize contamination by external factors, the funnels and containers for rain collection can be replaced with new ones after one hour.

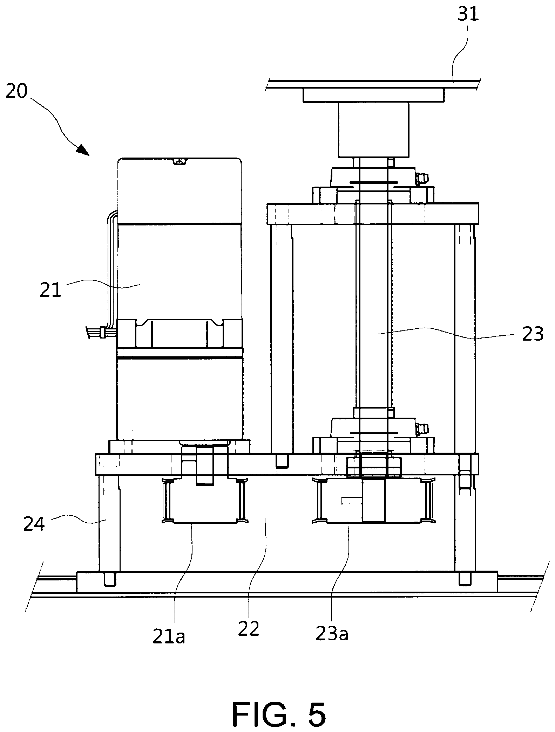

Fig. 5 is an exemplary view of the driving unit, which can be employed in the automatic precipitation sampler of Fig. 1.

Referring to Fig. 5, in the automatic precipitation sampler according to the present embodiment, the driving unit 20 includes a motor 21, timing pulleys 21a and 23a, a belt 22, and the drive shaft 23. The driving unit 20 can rotate the driving plate 31 of the circular table, which is connected to the driving shaft 23, by the rotation force of the motor 21.

A stepping motor can be used as the motor 21 so as to perform the nine-division index operation (per one revolution) of the drive plate 31 or the circular table. The motor 21 is vertically mounted by the support frame 24, wherein the rotation force of the motor 21 is transmitted to the second timing pulley 23a through the first timing pulley 21a and the belt 22 and thus can rotate the circular table, which is directly connected to the drive shaft 23, according to the rotation of the drive shaft 23, which is connected to the second timing pulley 23a. The drive shaft 23 may be supported by a bearing vertically arranged on one side of the support frame 24.

Meanwhile, the automatic precipitation sampler according to the embodiment of the present invention may include a sensor for monitoring and controlling the driving unit. The sensor includes at least one sensor that senses whether a funnel or a sample container is in a specific position (see 51 and 52 in Fig. 1). The sensor may be an infrared sensor, an optical sensor, a vision sensor, or the like. If it is detected by the sensor that any one of the funnel and the sample container is not located at the specific position, a controller in the control box can pass the current step of the circular table to a next step.

In addition, the sensor may include an origin sensor. The origin sensor can be used to set the initial position of the circular table operation. If the sensor detects that the circular table is activated/driven at any other position than the normal position thereof, the controller moves the circular table to an over-step or back-step so as to locate the circular table in the right position.

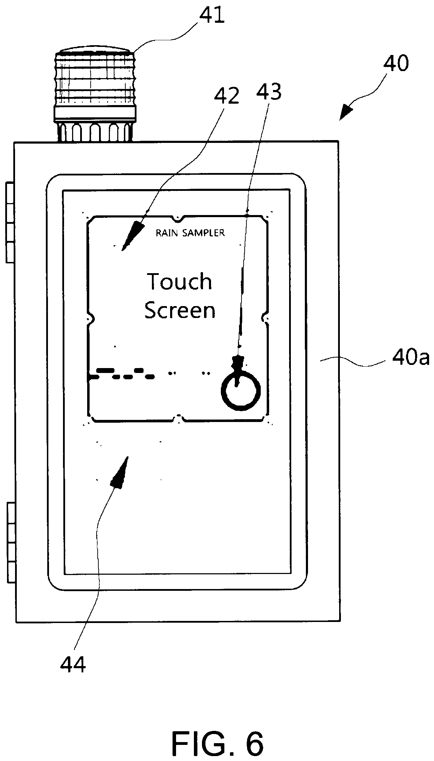

Fig. 6 is an exemplary view of the control box which can be employed in the automatic precipitation sampler of Fig. 1.

Referring to Fig. 6, in the automatic precipitation sampler according to this embodiment, the control box 40 may be attached to a side surface of the upper body of the main body. The control box 40 may be coated for waterproofing or rustproofing so as to prevent the penetration of rainwater, etc. or rust in the case of outdoor installation.

The control box 40 may have an alarm lamp 41 on the upper portion thereof. The control box 40 may also have a 5-inch touch screen 42, a power button 43, an emergency stop button, a manual/automatic regulator (a selector), an origin lamp, a reset lamp, a temperature controller 44 or the like.

The touch screen 42 can display the information required for the operation or the like of the equipment, and can set the operation conditions of the equipment. For example, display information or setting information may include manual operation, operation time adjustment, automatic operation running/stopping, operation time information and remaining operation time, the stepwise movement operation of the circular table, upper water receiving port cover opening/closing, or the like.

The control box 40 may have a processor and a memory provided therein, wherein the control box 40 can be supplied with external commercial power or battery power. The power supplied to the control box 40 may be single-phase 220 V, 60 Hz, but is not limited thereto. The control box 40 can control the power supplied to the constituent elements like the main body, the driving unit, and the like.

The method of operating an automatic precipitation sampler according to the above-described embodiments will be described as follows.

When the start button is pressed on the front control panel of the control box 40 of the automatic precipitation sampler, the cover can be automatically opened first and then the driving plate can be moved to the initial position thereof. The total of nine plastic disposable funnels and the total of nine sample containers can be provided in the automatic precipitation sampler such that the automatic precipitation sampler can be set to collect rain in each sample container per hour.

The rain collection time can be adjusted by the setting timer. If one hour is set by the setting timer, rain collection is carried out for one hour. After one hour, the circular table including the driving plate rotates one step at a time while the cover is opened, so that a next sample container is moved to the position under the water receiving port and aligned with water receiving port and the aligned sample container is filled with the rain for the set time. As the rain collection is carried out for all the number of containers or for all the time set repeatedly, the cover can be closed and the rain collection can be automatically finished.

In the case of employing the automatic precipitation sampler of the above-described embodiment, it is possible to efficiently analyze the effect of rainfall (snowfall) experiment by collecting rain and snow before and after the experiment in order to scientifically and continuously verify the cloud physics research and the weather adjustment effect.

In addition, user convenience can be greatly improved by displaying and controlling the information required for the operation of the automatic precipitation sampler equipment through the touch screen installed in the control box.

Besides, there is an advantage that the heater and the hot wire for the temperature maintenance are arranged in the upper portion and the inside of the equipment so that the precipitation can be sampled automatically even in snowfall.

While the embodiments of the present disclosure and their advantages have been described in detail above, it should be understood that various changes, substitutions and alterations may be made herein without departing from the scope of the disclosure.

## Claims

1. An automatic precipitation sampler system, comprising:
a main body (10) having an water receiving port (16) provided in the upper portion thereof;
a driving unit (20) disposed in the main body (10);
a circular table (30) disposed in the main body (10) and rotating by the driving unit (20);
a plurality of sample containers (33a) arranged at uniform intervals from each other at positions spaced away from the center of the circular table (30) by a predetermined distance in the radial direction of the circular table (30); and
funnels (34a-34i) respectively arranged on top of each of the plurality of sample containers (33a) such that any one of the funnels (34a-34i) is aligned with the water receiving port (16) .

2. The automatic precipitation sampler system according to claim 1, wherein the plurality of sample containers (33a) are arranged in a circle and are rotated on the circular table (30), which is rotated by the driving unit (20), so as to be sequentially arranged below the water receiving port (16).

3. The automatic precipitation sampler system according to claim 1 or 2, wherein the circular table (30) has container holders (32a) for fixing or supporting the plurality of sample containers (33a).

4. The automatic precipitation sampler system according to any one of claims 1 to 3, further comprising a control box (40) coupled to the outside of the main body (10) and connected to a cover unit (18) of the main body (10) and the driving unit (20) so as to control the operations of the cover unit (18) and the driving unit (20).

5. The automatic precipitation sampler system according to claim 4, wherein a controller in the control box (40)
- controls the cover unit (18) according to an input signal or a preset command such that a cover (17) of the water receiving port (16), which is mounted on an upper body of the main body (10), is opened or closed, and/or
- controls the driving unit (20) according to the input signal or the preset command such that the circular table (30) rotates at a predetermined angle at a preset time.

6. A method of operating an automatic precipitation sampler system including a main body (10), a driving unit (20), a circular table (30) and a control box (40), comprising:
the step of opening a cover (17) of a water receiving port (16) of an upper body of the main body (10);
the step of aligning one of a plurality of sample containers (33a), which are arranged in a circle on a circular table (30) inside the upper body, under the water receiving port (16); and
the step of controlling the driving unit (20) by a controller of the control box (40) according to preset operation conditions stored in a memory of the control box (40) such that the circular table (30) rotates and the plurality of sample containers (33a) circulates in sequence at every preset time.

7. The method of operating an automatic precipitation sampler system according to claim 6, further comprising the step of covering the water receiving port (16) when rain collection is completed for the plurality of sample containers (33a) or according to a preset operation condition, after the rotating step.

8. The method of operating an automatic precipitation sampler system according to claim 6 or 7, wherein a touch screen (42) of the control box (40) displays system conditions or operation conditions in the steps.
